# EUROPEAN PATENT SPECIFICATION

(11) **EP 4 074 585 B1**
(45) Date of publication and mention of the grant of the patent: **02.07.2025**
(21) Application number: 21168573.0
(22) Date of filing: 15.04.2021
(51) Int. Cl.: B62K 5/10, B62K 7/04, B62K 5/06, B62M 6/60, B62M 9/02, B62M 6/50, B62K 15/00, B62J 45/411

(54) **A UTILITY VEHICLE**
NUTZFAHRZEUG
VÉHICULE UTILITAIRE

(43) Date of publication of application: 19.10.2022
(73) Proprietor: Laplandar ApS, 2930 Klampenborg (DK)
(72) Inventor: Kirsebom, Jochum, Trygve, Harald, 2930 Klampenborg (DK); Pedersen, Glenn, 7100 Vejle (DK); Dzafic, Adis, 3700 Rønne (DK)
(74) Representative: Inspicos P/S

(56) References cited:
- EP-A2- 3 205 564
- JP-A- 2019 077 287
- JP-A- H08 142 966
- KR-A- 20120 040 850
- KR-B1- 100 758 311

## Description

### INTRODUCTION

The disclosure relates to a utility vehicle.

### BACKGROUND

Utility vehicles such as tricycles with a battery-operated support motor are becoming increasingly popular. Tricycles exist in which the frame is partly tiltable to support turning or leaning into corners. To establish tilting ability, a front section of the vehicle is joined to a rear section through a bearing which allows the sections to rotate relative to each other. Disadvantages of the existing vehicles include the complexity of the bearing not least relative to assembly and disassembly of a vehicle, relative to maintenance, and relative to durability of the vehicle. Other disadvantages relate to the stability of the vehicle when the front section can tilt relative to the rear section, particularly when the vehicle is a tricycle with two rear wheels and a single front wheel.

Shipping costs can be high considering the relatively high space to weight ratio, and utility vehicles may therefore become expensive in countries with no internal manufacturing.

JP H08142966, KR20120040850, and EP3205564 disclose different versions of vehicles with pedals and/or electrical motors. and describes various mechanical solutions for enhancing stability and usefulness. JP2019077287 and KR100758311 each disclose a vehicle according to the preamble of claim 1.

### SUMMARY

To improve existing utility vehicles, a utility vehicle according to the invention is provided in independent claim 1. Preferred embodiments of the invention are provided in the dependent claims. The utility vehicle is provided with a rear section and a front

section. The rear and front sections define a lengthwise direction in which the front section is in front of the rear section. The front section forms a seat, at least one front wheel rotatable about a wheel axis, and a steering handle operatively connected to the front wheel, the rear section forming at least two rear wheels, a powered drive, and a utility bed.

The front section is joined to the rear section in a bearing structure providing a combined radial and axial bearing suspension allowing rotation of the front section relative to the rear section about a rotation axis. The bearing structure also allows transfer of axial force between the front section and the rear section.

By combining transfer of axial force and radial force between the front and rear sections in one single entity which joins the sections, easy assembly, maintenance, and disassembly is facilitated along with a simple design and a good balance in swings.

The utility vehicle may particularly form a tricycle with a manual drive input e.g. via pedals. The utility bed serves as a means for cargo transport.

The front section may form a seat comparable to the seat of a bicycle, i.e. attached to form a continuation of a post extending upright from a crank shaft. The front wheel is rotatable about a wheel axis, e.g. formed by a hub of the kind known from front wheels of bikes. The front wheel may further include a brake, and it may be connected to the steering handle via a dampened suspension structure, e.g. gas dampened.

The rear section forms at least two rear wheels and it comprises a powered drive in the form of an electric motor arranged to drive one or both rear wheels.

The utility bed can carry load, and it may particularly be shaped to hold a cargo container.

For that purpose, it may form a platform surrounded at least partly by a fence reducing the risk of sliding of the carried load.

The bearing structure provides a combined radial and axial bearing suspension. The bearing structure is releasably attached both to the front section and to the rear section. This allows shipping of the vehicle, e.g. on a single EU pallet or similar standard pallet, and subsequently the user to assemble the vehicle which is shipped in two separate sections. It further allows the user to disassemble the vehicle and replace the front section, the rear section, or the bearing structure. The bearing structure may be attached by known assembly structures such as bolts or rivets etc.

The bearing structure is a closed assembly comprising two parts, herein referred to as a rotor and a stator part. The two parts being rotationally joined, e.g. by traditional roller or ball bearing structures. One of the two parts is attached to the front section and the other of the two parts is attached to the rear section. The bearing assembly is configured not to facilitate separation of the rotor part from the stator part. In this embodiment, the two parts may be fixed in a water and dust proof manner, and maintenance may be reduced to complete replacement of the bearing structure. Such a replacement is facilitated by the releasable attachment of the bearing structure to the front and rear sections and can be carried out by the user.

A particularly good balance may be obtained if the rotation axis is located between the seat and the wheel axis when viewed in a projection onto a vertical plane perpendicular to the rotation axis. The location of the rotation axis becomes above the wheel axis in a use situation.

The utility vehicle may comprise a manual drive input comprising a crank structure connected to at least one of the rear wheels via a manual transmission.

The crank structure may comprise a crank arm attached for rotating a crank shaft about a crank axis and it may define a rotor field passed by the arm in a full rotation of the crank shaft. In this embodiment, a good balance may be obtained if the rotation axis intersects a projection of the rotor field on a center plane perpendicular to the crank axis. In this way, the rotation axis is within the zone in which the pedals are rotated, and that provides a safe and comfortable feeling for the user. In one such embodiment, the crank axis is perpendicular to the rotation axis, and the crank axis and rotation axis may intersect.

The manual transmission may be configured to operate the powered drive between an activated state and a non-activated state. The user may therefore only consider operating the manual transmission, e.g. by using pedals. When using the pedals, the powered drive is activated, and when stopping using the pedals, the powered drive is de-activated. This provides a very easy user interface and increases safety since the user will only need to consider whether to use the manual transmission.

In a use situation, the user may ride the vehicle like a normal bike. When the user rotates the pedals actively, the motor is started and provides additional power. When sufficient speed is achieved or when the user wants to stop, the active rotation of the pedals may be stopped, and that will automatically deactivate the motor.

The utility vehicle may comprise a power transmission connecting the powered drive to each of the at least two rear wheels. The power transmission may comprise a first belt pulley wheel connected to a first drive shaft via a first coupling, and a second belt pulley wheel connected to a second drive shaft via a second coupling. The first drive shaft may be connected to a first of the at least two rear wheels, the second drive shaft is connected to a second of the at least two rear wheels. In that way, the rear wheels are separated all the way to the belt pulleys which may be driven by the motor. This provides an ability to independently rotate each wheel and optimizes the ability to swing the vehicle through sharp turns. Particularly, the first and second coupling may provide freewheeling meaning that the coupling transfers torque only in one direction. This allow the vehicle to freewheel without transferring torque to the motor.

The system may act like an open differential with up to 100% torque transfer to highest path of resistance, i.e. to the wheel with most tire fiction. Typical open differential transfers tongue to the path of least resistance, i.e. to the wheel with least amount of traction.

In an alternative embodiment, the couplings may not be freewheeling, or they are selectable between a freewheeling and a non-freewheeling configuration. When not freewheeling, the motor can be used for braking the vehicle and thereby safe wear on the brakes of the vehicle. Additionally, the motor may generate power in a breaking operation and thereby optimize the power consumption.

The manual transmission may be connected to the crank structure by a chain wheel or series of chain wheels allowing freewheeling relative to the first and second drive shafts.

When reference herein is made to a chain or chain wheel, it may likewise be understood as a belt such as a tooth belt and a belt wheel.

The manual transmission may be connected to only one of the first and second drive shafts, or it may be connected to both drive shafts.

The manual transmission may be connected to the first and second drive shafts via a common intermediate drive shaft which is also arranged to be driven by the motor. This allows a simple and reliable torque transfer from the motor or from the manual transmission too the drive shafts.

A damper structure, particularly a damper having no spring effect, but only dampening effect may be arranged to act between the first and second section. This may prevent self-oscillation of the front section relative to the rear section and increase safety. The damper structure may comprise at least a first and a second separate damper, e.g. a pneumatic or hydraulic damper, e.g. of the kind known for dampening wheels movement in a car or front fork of a mountain bike. The damper may particularly extend between attachment points of the front section and the rear section such that the damper intersects a vertical plane in the lengthwise direction and extending through the rotation axis of the bearing structure.

The utility bed may form a platform for carrying items. To enable easy loading and unloading, the utility bed may form a forklift utility portion being in a lower level than the platform and allowing access for a forklift to enter below items carried by the platform. The forklift utility portion may define at least two elongated and parallelly disposed tracks extending in the lengthwise direction.

The platform may form an intermediate section between two outer sections, where the intermediate section is separated from the outer sections by the forklift utility portion.

The outer sections may comprise cavities, e.g. in the form of through holes allowing wheels of the cargo which is carried by the utility bed to extend through the outer sections and thereby de-activate such wheels during transportation on the utility bed.

Components of the powered drive and/or the manual transmission may be located in a compartment formed under the intermediate section. Particularly, the motor and the aforementioned common intermediate drive shaft receiving torque both from the manual transmission and the motor may be located under the intermediate section.

In a not claimed aspect, a load carrying assembly is provided. The assembly comprises a utility vehicle as described herein, and a container configured to be carried on the utility bed.

The container may have wheels on a lower surface such that the container can be rolled over a surface when it is not transported on the utility bed of the vehicle.

Through holes in the utility bed, particularly said through holes in the outer sections, may receive such wheels of the container and thereby deactivate the ability of the container to roll, while simultaneously lowering the center of gravity significantly, and keeping the load/unload height at optimal ergonomic height, during parcel delivery. This provides the combined feature of a container that can roll when not being transported on the utility bed, and which can't roll when loaded onto the utility bed and thereby be transported safely.

### LIST OF DRAWINGS

In the following, embodiments of the disclosure will be described in further details with reference to the drawing in which:
Fig. 1 illustrates a utility vehicle;
Figs. 2-3 illustrate the vehicle in a partly disassembled state;
Figs. 4-5 illustrate the bearing structure connecting the front and rear sections;
Fig. 6 illustrates the location of the rotation axis relative to the wheel axis;
Fig. 7 illustrates details of a combined power transmission and manual transmission;
Figs 8-10 illustrates details of the combined power transmission and features of the manual transmission;
Fig. 11 illustrates a damper structure between the front and rear sections;
Fig. 12 illustrates a forklift feature of the utility bed; and
Fig. 13 illustrates a utility vehicle with a container placed on the utility bed.

### DESCRIPTION OF EMBODIMENTS

Referring to the drawings, the utility vehicle is exemplified by a tricycle 1 with manual and electrical drive. An alternative would be a purely electrically driven vehicle or a purely manually driven vehicle.

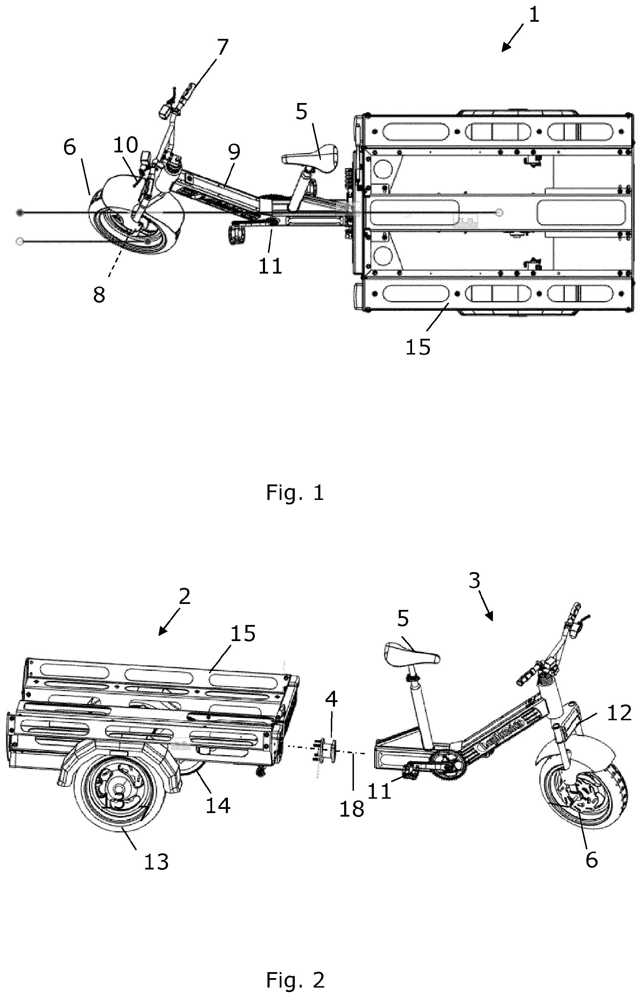

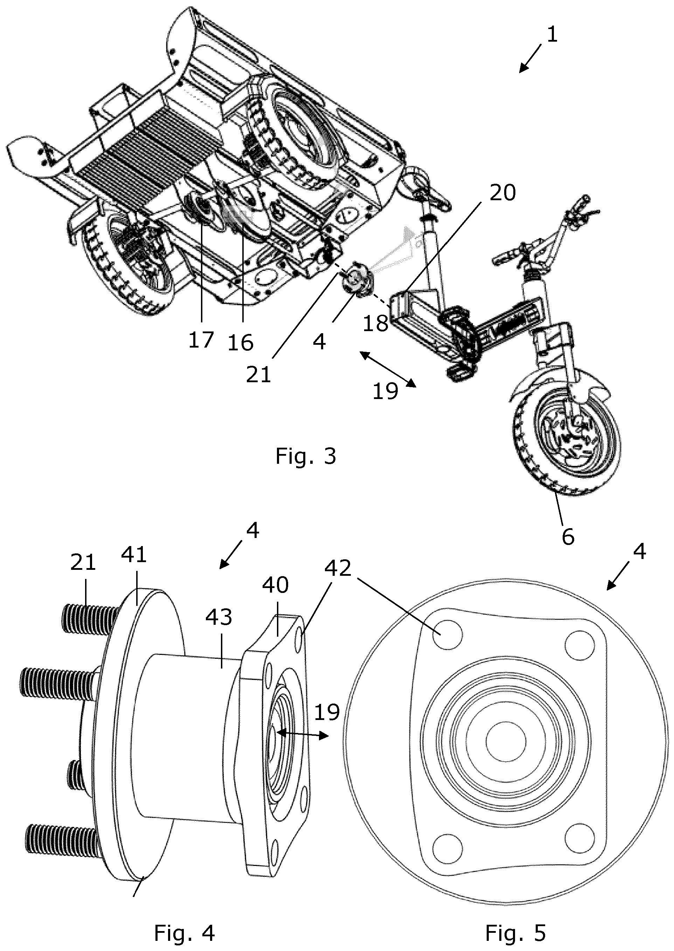

Figs. 1-3 illustrate the vehicle 1. In Fig. 1, the vehicle is assembled. Fig. 2 illustrates the vehicles in three parts being a rear section 2, front section 3, and a bearing structure 4. Fig. 3 illustrates the vehicle seen from below.

The bearing structure 4 connects the front and rear sections in a lengthwise direction. The bearing structure is made as a single entity which is detachable from the rear section and from the front section. It is a closed unit forming a combined radial and axial suspension, and it is sealed to provide suitable weather protection independent on the front and rear sections.

The front section comprises a seat 5 e.g. in the form of a regular bicycle saddle.

A single front wheel 6 is controlled by the steering handle 7, functionally in the same way as a regular bicycle.

The front wheel is rotatable about a wheel axis illustrated by the dotted line 8.

The front section may comprise a battery, e.g. housed in the frame section illustrated by numeral 9. However, the battery may also be located in the rear section near the motor and operatively connected to the motor in the rear section and controlled by control handles 10 on the steering handle 7.

The pedal and crank structure 11 forms a manual drive input coupled by a chain or belt linkage (not illustrated) to the rear section.

The front wheel is suspended in the front fork 12.

The rear section comprises two rear wheels 13, 14. and a utility bed 15 for carrying cargo load. A motor 16 (c.f. Fig. 3) provides powered drive to the rear wheels via the transmission 17.

The bearing structure 4 allows rotation around the rotation axis illustrated by dotted line 18 and facilitates transfer of axially directed forces between the front and rear section as indicated by the arrow 19

The combined radial and axial bearing is releasably attached to the front section by fastening means. In the illustrated embodiments, the combined radial and axial bearing is releasably attached by use of fastening means, e.g. including bolts (not shown) entering into the front bolt holes 20 and to the rear section by fastening means 21 entering into rear bolt holes (not shown) in the rear section. Fastening means may include bolts or rivets etc.

Fig. 4 illustrates an enlarged view of the bearing structure. The bearing structure is configured with a front-end plate 40 and a rear-end plate 41. The front-end plate is formed with bearing front bolt holes 42 for receiving fixing bolts when enter front bolt holes 20 in the front section. The rear-end plate is provided with either external treaded studs or internal threads 21. The front-end plate 40 and the rear-end plate 41 are joined by the bearing section 43 forming in one combined unit both a radial and an axial bearing. This bearing section is sealed and therefore protected independent of the front section and the rear section of the vehicle.

The bearing structure is configured to carry the entire load in the connection between the front section and the rear section and thereby forms a load path between the sections. Due to the bolted assembly, the bearing structure is releasable from both sections and the vehicle can therefore be taken apart efficiently and the bearing structure can be replaced if needed.

Fig. 5 illustrates the bearing when seen from the front-end plate i.e. looking in the axial direction.

The bearing structure is permanently sealed and combines the radial and axial forces in one pre-lubricated unit which dust and water tight and therefore requires no maintenance. Since maintenance is not possible, the risk of maintenance errors which could potentially lead to dangerous binding or locking is reduced.

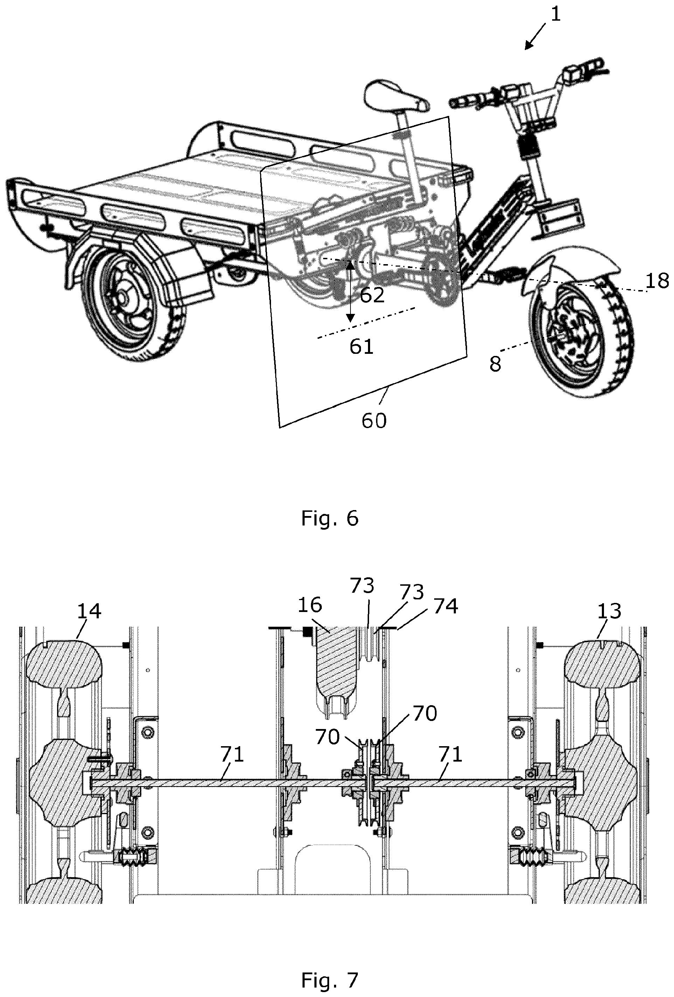

Fig. 6 illustrates a vertical plane 60. The plane is perpendicular to the rotation axis. If the wheel axis is projected onto the illustrated vertical plane, it will be located below the rotation axis of the bearing structure. I.e. the rotation axis is located above the wheel axis. The projection of the wheel axis 8 onto the plane is illustrated by the dotted line 61. The distance between the wheel axis projection 61 and the rotation axis 18 is indicated by arrow 62. This distance 62 could e.g. be anywhere between 0 and 30 percent of the distance between the rotation axis 18 and the seat, e.g. less than 25 percent, or less than 5 percent. This provides a particularly good balance when tilting the front section relative to the rear section during turning of the vehicle.

The utility vehicle may comprise said manual drive input, particularly a crank structure 11 with pedals connected to a crankshaft by crank arms. In this embodiment, the crank shaft may be rotatable about a crank axis. The crank axis may intersect the rotation axis, or the distance between the crank axis and the rotation axis, when the crank axis is projected onto the plane 60, may be smaller than the length of the crank arms connecting the pedals to the crankshaft.

The crank axis may be perpendicular to the rotation axis.

The crank may operate a chain extending to the powered drive in the rear section. Fig. 7 illustrates the drive system which combines powered drive and manual drive input.

Figs. 7-8 illustrate a combined manual transmission and power transmission. Each rear wheel 13, 14 is connected to a belt pulley wheel 70 via a drive shaft 71. The identical numbering indicates identical or at least functionally identical components of the right-side wheel and the left-side wheel. The belt pulley wheels 70 are driven by the electric motor 16 via the drive pulley wheels 73 and belts (not illustrated) extending between the belt pulley wheels and the drive pulley wheels. The belt pulley wheels are rotated by the pulley axle 74. The belt pulley wheels 70 are freewheeling relative to the drive shafts 71 such that they only drive the shafts in one rotational direction.

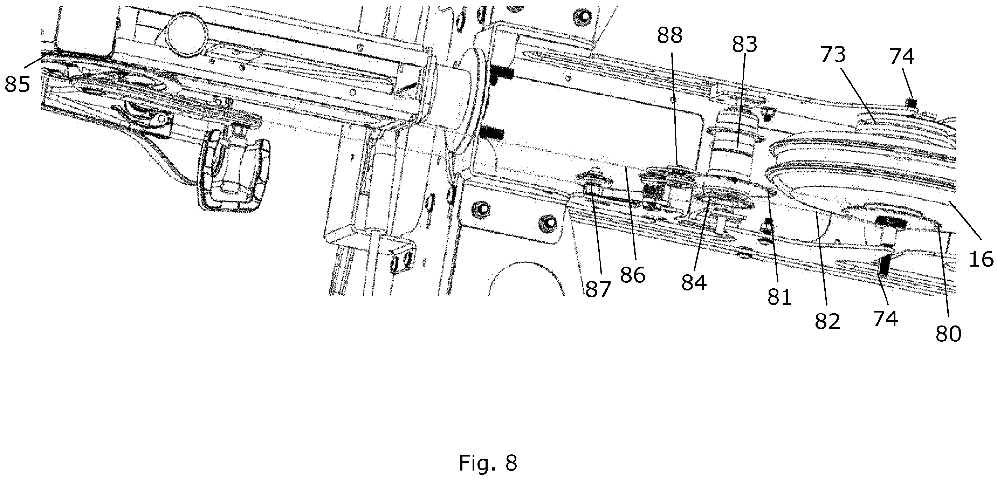

In manual mode, the drive pulley wheels 73 are driven by the chain wheel 80 attached to the pulley axle 74, c.f. Fig. 8. The chain wheel 80 is connected to a first intermediate chain wheel 81 by a first chain 82. The first intermediate chain wheel 81 rotates on the hub 83, and the hub 83 is of the kind known from rear wheels of bikes. The first intermediate chain wheel 81 can freewheel, i.e. it drives the hub only upon rotation in one direction, and the electric motor is therefore free to drive the vehicle without rotating the pedals and the vehicle can freewheel, e.g. downhill without rotating the pedals.

The pulley axle 74 is driven both by the chain wheel 80 and by the motor 16 and thereby forms common intermediate drive shaft joining torque from the pedals with torque from the motor.

The first intermediate chain wheel 81 is connected to and drives on the hub 83 with the second intermediate chain wheel 84. The second intermediate chain wheel 84 is connected to the crank chain wheel 85 of the crank structure 11 by a second chain 86.

Optionally, the drive pulley wheels 73 or the belt pulley wheels 70 are attached to freewheel, and the pedals may be free to drive the vehicle without rotating the electric motor.

The combined manual transmission and power transmission solution illustrated in Figs. 7-8, provides a compact and very efficient means of allowing the driven axle wheels to spin with different velocity, while providing mechanical traction control aid on slippery surfaces.

Fig. 8 further illustrates an electronic switch 87 arranged between the second intermediate chain wheel 84 and the crank chain wheel 85. The second chain further drives via a chain tension wheel 88.

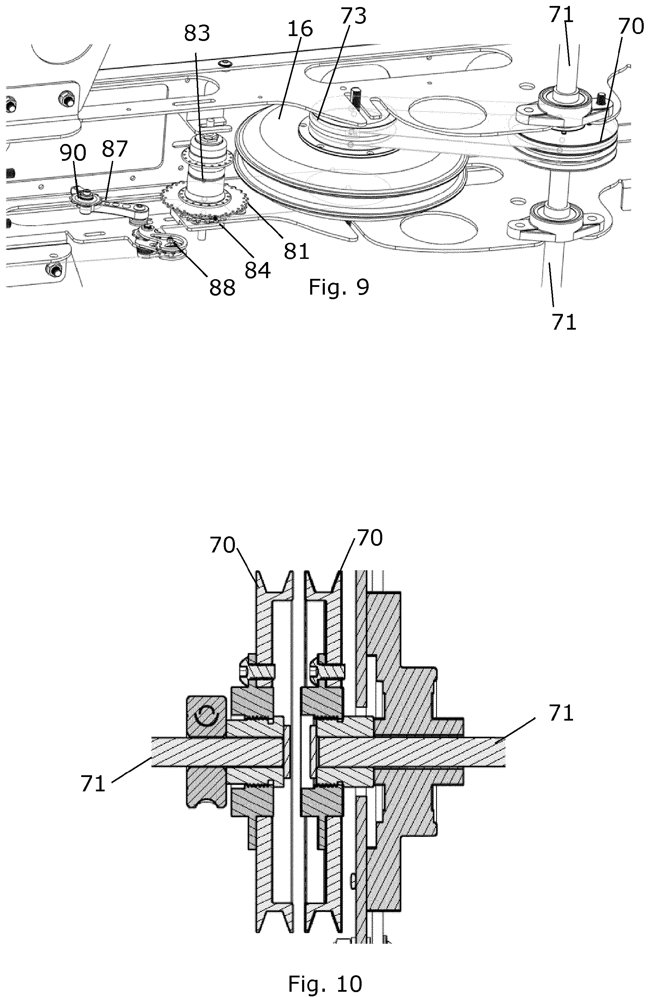

Fig. 9 illustrates further details of the electronic switch 87 and tensioner 88. The electronic switch is a torque sensor and comprises a switch wheel 90. When the chain is stretched in response to drive input via the pedals, the electronic switch is activated, and the electric motor is started. The chain thereby operates the powered drive. The electric motor provides support power for driving the vehicle such that the drive force is partly from the manual drive and partly from the powered drive. In alternative implementations, the torque sensor may vary the motor torque based on the registered tension in the chain.

Fig. 10 illustrates further details of the transmission structure connecting the powered drive and the manual drive to one or each of the at least two rear wheels.

The first drive shaft is connected to a first of the at least two rear wheels, the second drive shaft is connected to a second of the at least two rear wheels, and both the first coupling and the second coupling allow freewheeling in one rotational direction and direct transmission in the opposite rotational direction.

Fig. 10 illustrates that the shafts 71 are not connected. This allows each shaft and the corresponding wheel to rotate individually, independent on the other shafts and wheel. This supports sharp turns in which an out wheel may rotate at a higher speed than an inner wheel.

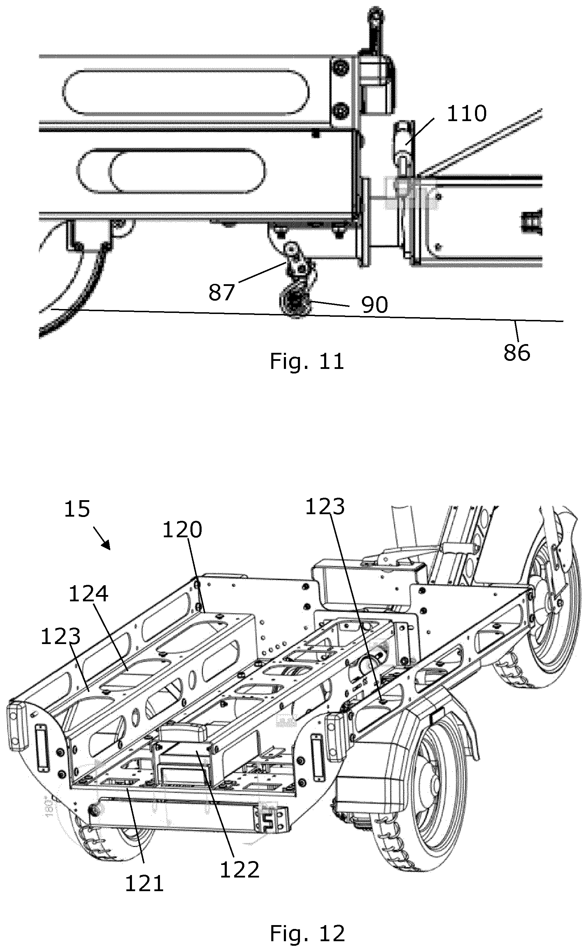

Fig. 11 illustrates a damper structure 110 acting on the bearing structure to dampen movement of the front section relative to the rear section about the rotation axis. The damper has no spring effect and thereby provides a pure dampening effect and not spring effect. The illustrated damper 110 is an oil damper with a piston movable in a cylinder by displacement of oil. The drawing illustrates only one damper. Two dampers may, however, have a positive effect on the dampening and provide a safety feature with continued dampening even if one damper fails. Fig. 11 also illustrates the engagement between the chain or belt 86 and the switch wheel 90.

Fig. 12 illustrates details of the utility bed 15. The utility bed is designed to carry cargo for transportation, and it forms a load platform 120 for carrying items in one level over ground. A recessed forklift utility portion 121 is at a lower level than the platform and forms elongated tracks. The forklift utility portion allows access for a forklift to enter below items carried by the platform. The elongated tracks are parallelly disposed and extend in the lengthwise direction to allow loading or emptying of the utility bed from behind the vehicle. The tracks could also be sideways arranged.

The load platform forms an intermediate section 122 between two outer sections 123. The intermediate and outer sections are separated by the forklift utility portion. The electric motor 16, the pulley wheels 73, the chain wheel 80, the intermediate chain wheels 81, 84 and the first chain 82 are located in the compartment formed underneath the intermediate section and the intermediate section and the sidewalls extending between the intermediate section 122 and the forklift utility portion 121 thereby protect the drive structure.

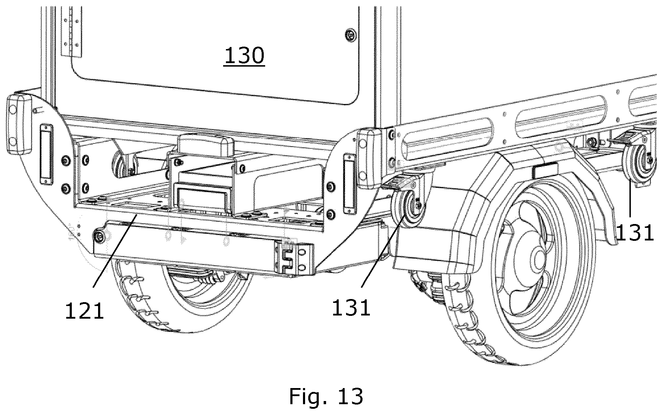

The outer sections 123 of the load platform 120 comprises through holes 124. These are explained further relative to Fig. 13 and provides spacing for wheels of containers to be transported on the utility bed 15.

Fig. 13 illustrates the vehicle with a container 130 loaded on the load platform and clearly illustrates the spacing for a forklift provided by the recessed forklift utility portion 121. The container wheels 131 are fixed on the container and used for rolling the container when it is not loaded onto the utility bed 15. The through holes 124 in the outer sections 123 of the load platform 120 allow the wheels 131 to extend through the outer section and thus the container to rest with its lower surface on the utility bed.

## Claims

1. A utility vehicle (1) comprising a rear section (2) and a front section (3) arranged in front of the rear section in a lengthwise direction, the front section forming a seat (5), at least one front wheel rotatable about a wheel axis (8), and a steering handle (7) operatively connected to the front wheel, the rear section forming at least two rear wheels (13, 14), a powered drive comprising a motor (16), and a utility bed (15), wherein the front section (3) is joined to the rear section (2) in a bearing structure (4) providing a combined radial and axial bearing suspension allowing rotation of the front section relative to the rear section about a rotation axis (18) and allowing transfer of axial force between the front section (3) and the rear section (2), wherein the bearing structure (4) is releasably attached both to the front section and to the rear section, **characterized in that** the bearing structure (4) is a permanently sealed and pre-lubricated unit which is dust and water tight.

2. The utility vehicle according to claim 1, wherein the bearing structure (4) is a closed bearing.

3. The utility vehicle according to any of the preceding claims, wherein the rotation axis (18) is located between the seat (5) and the wheel axis (8) in a projection onto a vertical plane perpendicular to the rotation axis (18).

4. The utility vehicle according to claim 1, comprising a manual drive input (11) comprising a crank structure (11) connected to at least one of the rear wheels via a manual transmission.

5. The utility vehicle according to claim 4, wherein the crank structure (11) comprises a crank arm attached for rotating a crank shaft about a crank axis and defining a rotor field passed by the crank arm in a full rotation of the crank shaft, and wherein the rotation axis (18) intersects a projection of the rotor field on a center plane perpendicular to the crank axis.

6. The utility vehicle according to claim 5, wherein the crank axis is perpendicular to the rotation axis (18).

7. The utility vehicle according to any of claims 4-6, wherein the manual transmission operates the powered drive between an activated state and a non-activated state.

8. The utility vehicle according to any of the preceding claims, comprising a power transmission connecting the powered drive to each of the at least two rear wheels (13, 14), the power transmission comprising:
- a first belt pulley wheel (70) connected to a first drive shaft (71) via a first coupling, and
- a second belt pulley wheel (70) connected to a second drive shaft (71) via a second coupling;
wherein the first drive shaft (71) is connected to a first of the at least two rear wheels (13), the second drive shaft (71) is connected to a second of the at least two rear wheels (14).

9. The utility vehicle according to claims 4 and 8, wherein the manual transmission is connected to the crank structure (11) by a chain wheel structure allowing freewheeling relative to the drive shafts (71).

10. The utility vehicle according to any of the preceding claims, comprising a damper structure (110) having no spring effect and acting between the first and second section to dampen movement of the front section (3) relative to the rear section (2) about the rotation axis (18).

11. The utility vehicle according to claim 10, wherein the damper structure (110) comprises at least a first and a second separate damper.

12. The utility vehicle according to any of the preceding claims, the utility bed forming a platform (120) for carrying items and forming a forklift utility portion (121) being in a lower level than the platform (120) and allowing access for a forklift to enter below the items carried by the platform.

13. The utility vehicle according to claim 12, wherein the forklift utility portion (121) defines at least two elongated and parallelly disposed tracks extending in the lengthwise direction.

## Patentansprüche

1. Nutzfahrzeug (1), umfassend einen hinteren Abschnitt (2) und einen vorderen Abschnitt (3), der in einer Längsrichtung vor dem hinteren Abschnitt angeordnet ist, wobei der vordere Abschnitt einen Sitz (5), mindestens ein um eine Radachse (8) drehbares Vorderrad und einen mit dem Vorderrad wirkverbundenen Lenkgriff (7) bildet und der hintere Abschnitt mindestens zwei Hinterräder (13, 14), einen mit Leistung versorgten Antrieb, der einen Motor (16) umfasst, und eine Nutzfläche (15) bildet, wobei der vordere Abschnitt (3) in einer Lagerstruktur (4), die eine kombinierte radiale und axiale Lageraufhängung bereitstellt, die Drehung des vorderen Abschnitts relativ zu dem hinteren Abschnitt um eine Drehachse (18) ermöglicht und Übertragung von axialer Kraft zwischen dem vorderen Abschnitt (3) und dem hinteren Abschnitt (2) ermöglicht, mit dem hinteren Abschnitt (2) verbunden ist, wobei die Lagerstruktur (4) sowohl an dem vorderen Abschnitt als auch dem hinteren Abschnitt lösbar angebracht ist, **dadurch gekennzeichnet, dass** die Lagerstruktur (4) eine dauerhaft abgedichtete und vorgeschmierte Einheit ist, die staub- und wasserdicht ist.

2. Nutzfahrzeug nach Anspruch 1, wobei die Lagerstruktur (4) ein geschlossenes Lager ist.

3. Nutzfahrzeug nach einem der vorhergehenden Ansprüche, wobei sich die Drehachse (18) in einer Projektion auf eine vertikale Ebene senkrecht zu der Drehachse (18) zwischen dem Sitz (5) und der Radachse (8) befindet.

4. Nutzfahrzeug nach Anspruch 1, umfassend eine manuelle Antriebseingabe (11), die eine Kurbelstruktur (11) umfasst, die über ein manuelles Getriebe mit mindestens einem der Hinterräder verbunden ist.

5. Nutzfahrzeug nach Anspruch 4, wobei die Kurbelstruktur (11) einen Kurbelarm umfasst, der zum Drehen einer Kurbelwelle um eine Kurbelachse angebracht ist und ein Rotorfeld definiert, das durch den Kurbelarm in einer vollen Drehung der Kurbelwelle durchquert wird, und wobei die Drehachse (18) eine Projektion des Rotorfelds auf eine Mittelebene senkrecht zu der Kurbelwelle schneidet.

6. Nutzfahrzeug nach Anspruch 5, wobei die Kurbelachse senkrecht zu der Drehachse (18) verläuft.

7. Nutzfahrzeug nach einem der Ansprüche 4-6, wobei das manuelle Getriebe den mit Leistung versorgten Antrieb zwischen einem aktivierten Zustand und einem nicht aktivierten Zustand betreibt.

8. Nutzfahrzeug nach einem der vorhergehenden Ansprüche, umfassend eine Leistungsübertragung, die den mit Leistung versorgten Antrieb mit jedem der mindestens zwei Hinterräder (13, 14) verbindet, wobei die Leistungsübertragung Folgendes umfasst:
- eine erste Riemenscheibe (70), die über eine erste Kopplung mit einer ersten Antriebswelle (71) verbunden ist, und
- eine zweite Riemenscheibe (70), die über eine zweite Kopplung mit einer zweiten Antriebswelle (71) verbunden ist;
wobei die erste Antriebswelle (71) mit einem ersten der mindestens zwei Hinterräder (13) verbunden ist und die zweite Antriebswelle (71) mit einem zweiten der mindestens zwei Hinterräder (14) verbunden ist.

9. Nutzfahrzeug nach Anspruch 4 und 8, wobei das manuelle Getriebe durch eine Kettenradstruktur, die Freilauf relativ zu den Antriebswellen (71) ermöglicht, mit der Kurbelstruktur (11) verbunden ist.

10. Nutzfahrzeug nach einem der vorhergehenden Ansprüche, umfassend eine Dämpferstruktur (110), die keine Federwirkung aufweist und zwischen dem ersten und dem zweiten Abschnitt wirkt, um Bewegung des vorderen Abschnitts (3) relativ zu dem hinteren Abschnitt (2) um die Drehachse (18) zu dämpfen.

11. Nutzfahrzeug nach Anspruch 10, wobei die Dämpferstruktur (110) mindestens einen ersten und einen zweiten separaten Dämpfer umfasst.

12. Nutzfahrzeug nach einem der vorhergehenden Ansprüche, wobei die Nutzfläche eine Plattform (120) zum Tragen von Gegenständen bildet und einen Gabelstaplernutzbereich (121) bildet, der sich in einer niedrigeren Ebene als die Plattform (120) befindet und Zugriff für einen Gabelstapler ermöglicht, um unterhalb der durch die Plattform getragenen Gegenstände einzufahren.

13. Nutzfahrzeug nach Anspruch 12, wobei der Gabelstaplernutzbereich (121) mindestens zwei längliche und parallel angeordnete Bahnen definiert, die sich in der Längsrichtung erstrecken.

## Revendications

1. Véhicule utilitaire (1) comprenant une section arrière (2) et une section avant (3) disposée devant la section arrière dans une direction longitudinale, la section avant formant un siège (5), au moins une roue avant pouvant tourner autour d'un axe de roue (8), et une poignée de direction (7) reliée de manière fonctionnelle à la roue avant, la section arrière formant au moins deux roues arrière (13, 14), un entraînement alimenté en puissance comprenant un moteur (16), et un plateau utilitaire (15), dans lequel la section avant (3) est jointe à la section arrière (2) dans une structure de palier (4) fournissant une suspension combinée de palier radial et axial permettant la rotation de la section avant par rapport à la section arrière autour d'un axe de rotation (18) et permettant le transfert de la force axiale entre la section avant (3) et la section arrière (2), dans lequel la structure de palier (4) est fixée de manière amovible à la fois à la section avant et à la section arrière, **caractérisé en ce que** la structure de palier (4) est une unité scellée de manière permanente et pré-lubrifiée qui est étanche à la poussière et à l'eau.

2. Véhicule utilitaire selon la revendication 1, dans lequel la structure de palier (4) est un palier fermé.

3. Véhicule utilitaire selon l'une quelconque des revendications précédentes, dans lequel l'axe de rotation (18) est situé entre le siège (5) et l'axe de roue (8) dans une projection sur un plan vertical perpendiculaire à l'axe de rotation (18).

4. Véhicule utilitaire selon la revendication 1, comprenant une entrée d'entraînement manuel (11) comprenant une structure de manivelle (11) reliée à au moins une des roues arrière par l'intermédiaire d'une transmission manuelle.

5. Véhicule utilitaire selon la revendication 4, dans lequel la structure de manivelle (11) comprend un bras de manivelle fixé pour faire tourner un arbre de manivelle autour d'un axe de manivelle et définir un champ de rotor traversé par le bras de manivelle lors d'une rotation complète de l'arbre de manivelle, et dans lequel l'axe de rotation (18) coupe une projection du champ de rotor sur un plan central perpendiculaire à l'axe de manivelle.

6. Véhicule utilitaire selon la revendication 5, dans lequel l'axe de manivelle est perpendiculaire à l'axe de rotation (18).

7. Véhicule utilitaire selon l'une quelconque des revendications 4 à 6, dans lequel la transmission manuelle met en fonctionnement l'entraînement alimenté en puissance entre un état activé et un état non activé.

8. Véhicule utilitaire selon l'une quelconque des revendications précédentes, comprenant une transmission de puissance reliant l'entraînement alimenté en puissance à chacune parmi l'au moins deux roues arrière (13, 14), la transmission de puissance comprenant :
- une première roue de poulie à courroie (70) reliée à un premier arbre d'entraînement (71) par l'intermédiaire d'un premier accouplement, et
- une seconde roue de poulie à courroie (70) reliée à un second arbre d'entraînement (71) par l'intermédiaire d'un second accouplement ;
dans lequel le premier arbre d'entraînement (71) est relié à une première roue parmi l'au moins deux roues arrière (13), le second arbre d'entraînement (71) est relié à une seconde roue parmi l'au moins deux roues arrière (14).

9. Véhicule utilitaire selon les revendications 4 et 8, dans lequel la transmission manuelle est reliée à la structure de manivelle (11) par une structure de roue à chaîne permettant une roue libre par rapport aux arbres d'entraînement (71).

10. Véhicule utilitaire selon l'une quelconque des revendications précédentes, comprenant une structure d'amortissement (110) n'ayant pas d'effet ressort et agissant entre la première et la seconde section pour amortir le mouvement de la section avant (3) par rapport à la section arrière (2) autour de l'axe de rotation (18).

11. Véhicule utilitaire selon la revendication 10, dans lequel la structure d'amortisseur (110) comprend au moins un premier et un second amortisseur séparé.

12. Véhicule utilitaire selon l'une quelconque des revendications précédentes, le plateau utilitaire formant une plate-forme (120) pour transporter des articles et formant une partie utilitaire pour chariot élévateur (121) se trouvant à un niveau inférieur à la plate-forme (120) et permettant l'accès à un chariot élévateur pour entrer sous les articles transportés par la plate-forme.

13. Véhicule utilitaire selon la revendication 12, dans lequel la partie utilitaire de chariot élévateur (121) définit au moins deux pistes allongées et disposées parallèlement s'étendant dans la direction longitudinale.
